(19) Europäisches Patentamt / European Patent Office / Office européen des brevets

(11) **EP 2 993 513 B1**

(12) **EUROPEAN PATENT SPECIFICATION**

(45) Date of publication and mention
of the grant of the patent:
**24.03.2021  Bulletin 2021/12**

(21) Application number: **13881125.2**

(22) Date of filing: **03.04.2013**

(51) Int Cl.:
***G02B 27/01*** *(2006.01)*

(86) International application number:
**PCT/JP2013/060239**

(87) International publication number:
**WO 2014/162542 (09.10.2014 Gazette 2014/41)**

(54) **COMBINER UNIT**

KOMBINATOREINHEIT

UNITÉ COMBINEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2016  Bulletin 2016/10**

(73) Proprietors:
• **Pioneer Corporation
Tokyo 113-0021 (JP)**
• **Tohoku Pioneer Corporation
Tendo-shi
Yamagata 994-8585 (JP)**

(72) Inventors:
• **MABUCHI, Toshikazu
Kawagoe-shi
Saitama 350-8555 (JP)**

• **TANAHASHI, Yasuo
Kawasaki-shi
Kanagawa 212-0031 (JP)**
• **SATOU, Nobuyuki
Tendo-shi
Yamagata 994-8585 (JP)**

(74) Representative: **Grünecker Patent- und
Rechtsanwälte
PartG mbB
Leopoldstraße 4
80802 München (DE)**

(56) References cited:
WO-A1-2013/128159    JP-A- 2002 052 956
JP-A- 2005 208 436    JP-A- 2008 132 005
JP-B1- 4 928 014    JP-B1- 4 928 014
US-A- 3 637 315    US-A- 3 802 764

**Description**

The present invention relates to a combiner unit which includes a combiner used for a head-up display.

In the related art, there are proposed a lot of head-up displays which allow a crew member of a vehicle to visually recognize various types of information such as navigation information overlapped with an outside view (for example, see Patent Literatures 1 and 2). Among these head-up displays, for example, as described in Patent Literature 1, there is a head-up display which includes a combiner unit having a combiner and a mechanism to hold the combiner. The combiner reflects a light beam emitted from a light source toward the crew member to project an image drawn by the light beam in a field of view of the crew member.

In many of the combiner units, the combiner is held in a state of being erected with respect to a horizontal plane. Then, in order to fit a light beam reflected by the combiner to the height of the eye of the crew member of the vehicle, an inclined angel (a tilt angle) of the combiner with respect to a vertical plane is adjusted when it is used. In the combiner unit of Patent Literature 1, the combiner is held to freely rotate about a rotation shaft located on a lower edge side of the combiner. Then, when the angle is adjusted, the combiner is rotated about the rotation shaft so that the tilt angle is adjusted.

Citation List

Patent Literature

Patent Literature 1: JP 10-268227 A
Patent Literature 2: JP 2012-133244 A
JP 4 928014 B1 describes a combiner having a rotation shaft held by peripheral structures on each side of the combiner according to the preamble of appended claim 1.

Document WO2013128159 A1 falling under the scope of Art 54(3) EPC discloses a combiner unit wherein a virtual axis around which the combiner rotates is not a tangential line to the reflecting surface of the combiner.

Summary of Invention

However, in a case where the combiner is rotated about the rotation shaft on the lower edge side, an optical axis distance between the light source and the combiner changes compared to that before the rotation. The optical axis distance described here refers to a distance of an optical axis connecting the center of a reflecting surface of the combiner and the light source. When the optical axis distance changes, the way of showing the image overlapped with the outside view over the combiner changes compared to that before the rotation. Among the combiner units, there is a combiner unit which includes a combiner having the rotation shaft located on an upper edge side of the combiner. Even in this case, when the combiner is rotated, the optical axis distance between the light source and the combiner changes, so that the way of showing the image overlapped with the outside view changes compared to that before the rotation. In this way, the combiner unit including the combiner that is rotated about the rotation shaft on the lower edge side or the upper edge side of the combiner has, for example, a problem in the way of showing the image overlapped with the outside view, which changes before and after the rotation of the combiner.

Therefore, an object of the present invention is to provide a combiner unit which suppresses a change before and after a rotation of a combiner in the way of showing an image overlapped with an outside view. This is achieved by the features of claim 1.

In order to solve the above problem, a first aspect of the present invention is a combiner unit including: a combiner which is used for a head-up display and reflects a light beam emitted from a light source toward a user to project an image drawn by the light beam in a field of view of the user; and an angle adjusting mechanism which holds the combiner to be rotatable about a virtual axis traversing an almost center in a vertical direction of the combiner that is erected with respect to a horizontal plane, and which adjusts an inclined angle of the combiner with respect to a vertical plane by rotating the combiner about the virtual axis, wherein the virtual axis is a tangential line of a reflecting surface of the combiner which reflects the light beam emitted from the light source.

Brief Description of Drawings

Fig. 1 is a schematic view illustrating a head-up display in which a combiner unit according to an embodiment of the present invention is mounted.

Fig. 2 is a schematic view illustrating an eye box of the head-up display.

Fig. 3 is a perspective exterior view of the combiner unit.

Figs. 4(A) to 4(C) are diagrams illustrating a pair of holding members illustrated in Fig. 3 together with the combiner which is held through a fixing member.

Fig. 5 is an enlarged view illustrating the side view in Fig. 4(B) alone.

Fig. 6 is a diagram illustrating a state in which one of the pair of holding members on the left side when viewed from a convex surface side of the combiner is supported by two rotation rollers.

Fig. 7 is an enlarged view of a driving unit which rotates the holding member.

Figs. 8(A) and 8(B) are schematic views illustrating a positional relation between a light beam emitted from a display device and the combiner when the combiner is viewed from the side, in each of a bottom tilt mechanism and a centerless tilt mechanism.

Fig. 9 is a graph illustrating a change in a position of a virtual image in each of the bottom tilt mechanism and the centerless tilt mechanism when the combiner falls toward a front glass and a tilt angle becomes larger.

Figs. 10(A) and (B) are diagrams schematically illustrating the virtual image in each of the bottom tilt mechanism and the centerless tilt mechanism when the combiner falls.

Fig. 11 is a diagram illustrating a parameter which is used in a defining equation of "Distortion."

Fig. 12 is a schematic view illustrating a positional relation between a light beam emitted from the display device and the combiner when the combiner is viewed from the upside, in each of the bottom tilt mechanism and the centerless tilt mechanism.

Fig. 13 is a graph illustrating a change in the size of the eye box when the height of the eye box is changed by changing the tilt angle of the combiner.

Fig. 14 is a diagram illustrating a positional relation between a light beam emitted from the display device, the combiner and the eye box when the combiner is viewed from the side, in each of the bottom tilt mechanism and the centerless tilt mechanism.

Fig. 15 is a graph illustrating a change in the height of the eye box when the tilt angle of the combiner is changed.

Figs. 16(A) and 16(B) are schematic views describing an advantage that the size of the combiner can be made larger in the centerless tilt mechanism than that in the lower edge tilt mechanism.

Fig. 17 is a schematic view illustrating a force that acts on the holding member.

Fig. 18 is a schematic view illustrating main parts of a driving unit which rotates a holding member according to another example different from the present embodiment.

Fig. 19 is a diagram illustrating another example of a method of applying a force to a holding member, in comparison to a method of applying a force by using a spring in the present embodiment.

Description of Embodiments

Hereinafter, a combiner unit according to an embodiment of the present invention will be described. The combiner unit according to the embodiment of the present invention includes a combiner which is used for a head-up display and reflects a light beam emitted from a light source toward a user to project an image drawn by the light beam in a field of view of the user, and an angle adjusting mechanism which holds the combiner to be rotated about a virtual axis traversing an almost center in a vertical direction of the combiner that is erected with respect to a horizontal plane, and which adjusts an inclined angle of the combiner with respect to a vertical plane by rotating the combiner about the virtual axis, wherein the virtual axis is a tangential line of a reflecting surface of the combiner which reflects the light beam emitted from the light source. In the combiner unit, the combiner is rotated about the virtual axis traversing the almost center in the vertical direction of the combiner. For this reason, in the combiner unit, a change before and after the rotation of the combiner in a distance of an optical axis connecting the center of a reflecting surface of the combiner and the light source is suppressed. As a result, according to the combiner unit, a change before and after the rotation of the combiner in the way of showing an image overlapped with an outside view is suppressed.

In addition, for example, compared to a case where the virtual axis is an axis passing through the center in the thickness direction of the combiner, the change before and after the rotation of the combiner in the optical axis distance is suppressed more. It is preferable that the angle adjusting mechanism includes a holding member which is provided at a lower end or in a vicinity of the combiner erected with respect to the horizontal plane and has a curved surface forming a part of an outer peripheral surface in a cylindrical shape having the virtual axis as its center, and a driving member which rotates the holding member about the virtual axis by rotating a rotation roller which has a peripheral surface that is in contact with the curved surface of the holding member.

In addition, the angle adjusting mechanism preferably includes a holding member which is provided at a lower end or in a vicinity of the lower end of the combiner erected with respect to the horizontal plane and has a curved surface forming a part of an outer peripheral surface in a cylindrical shape having the virtual axis as its center, and a plurality of rotation rollers which each has a peripheral surface that is in contact with the curved surface of the holding member, and which supports the holding member to be rotatable about the virtual axis. Therefore, with the configuration as simple as the curved surface and the plurality of rotation rollers supporting the curved surface, the combiner is positioned at a position at which the rotation center of the combiner matches the virtual axis.

In addition, in the combiner unit in which the angle adjusting mechanism includes the holding member and the plurality of rotation rollers, further preferably, an inner gear having the virtual axis as a center of a pitch circle is formed on a back side of a surface in which the curved surface of the holding member is formed, and the angle adjusting mechanism includes a circular gear which engages with the inner gear, and a driving unit which rotatably drives the circular gear to rotate the holding member about the virtual axis. Therefore, since the circular gear for rotating the holding member is contained on the back side, the angle adjusting mechanism and consequently the combiner unit are downsized.

In addition, in the combiner unit in which the inner gear is formed on the back side of the surface in which the curved surface is formed and the angle adjusting mechanism includes the driving unit, further preferably, the holding member is disposed on each of left and right sides of the combiner, the plurality of rotation rollers is disposed in the curved surface located on each of the left and right sides of the combiner, and the driving unit includes two circular gears which each engage with the inner gear located in each of left and right end portions of the combiner, a rotation shaft which connects shafts of the two circular gears, and a driver which directly or indirectly rotates the rotation shaft and the two circular gears . Therefore, since movement distances of the left and right end portions of the combiner at the time of a rotation of the combiner become equal, the rotation of the combiner becomes stable.

In addition, in the combiner unit in which the angle adjustingmechanism includes the holding member and the plurality of rotation rollers, the angle adjusting mechanism preferably further includes a biasing member which applies a force to the holding member in a direction to push the holding member against the plurality of rotation rollers. For example, in a case where the combiner unit is assembled in an in-vehicle head-up display, there is a possibility that vibration in the vertical direction be applied to the combiner. When the combiner moves up and down due to such vibration, an image overlapped with an outside view is vertically blurred. According to the above preferable mode, since the holding member is pushed against the plurality of rotation rollers, even in a case where such vibration is applied, the vertical movement of the combiner is suppressed, and consequently the blurring of the image is suppressed. Further, a combiner unit according to another embodiment of the present invention comprises: a combiner which is used for a head-up display and reflects a light beam emitted from a light source toward a user to project an image drawn by the light beam in a field of view of the user; and an angle adjusting mechanism which holds the combiner to be rotatable about a virtual axis traversing an almost center in a vertical direction of the combiner that is erected with respect to a horizontal plane, and which adjusts an inclined angle of the combiner with respect to a vertical plane by rotating the combiner about the virtual axis, wherein the angle adjusting mechanism includes a holding member which is provided at a lower end or in a vicinity of the combiner erected with respect to the horizontal plane and has a curved surface forming a part of an outer peripheral surface in a cylindrical shape having the virtual axis as its center, and a driving member which rotates the holding member about the virtual axis by rotating a rotation roller which has a peripheral surface that is in contact with the curved surface of the holding member.

Embodiments

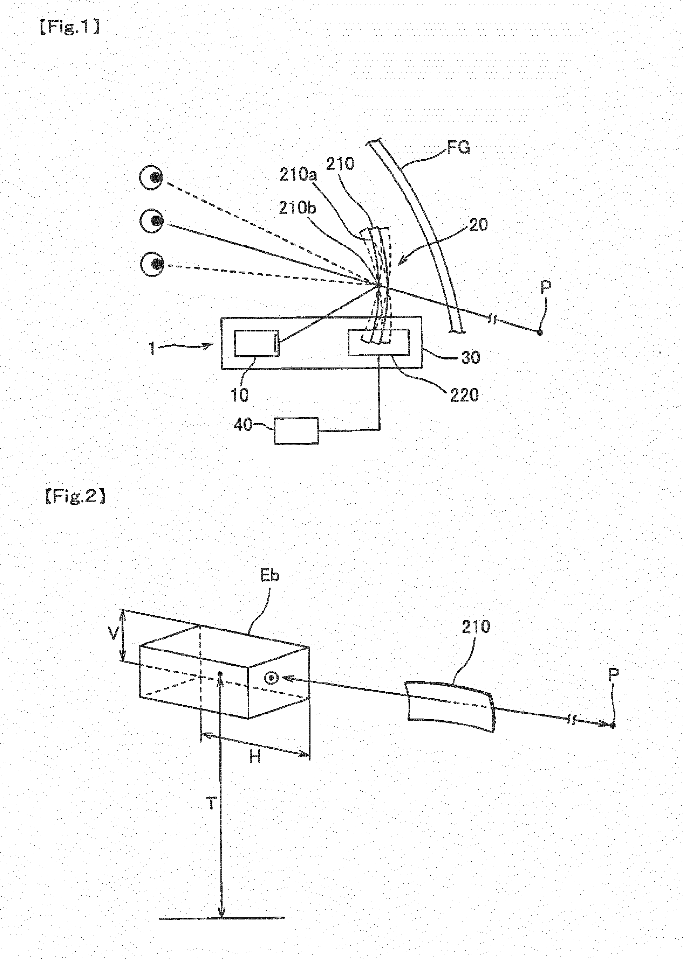

A combiner unit according to an embodiment of the present invention will be described with reference to Figs. 1 to 19.

Fig. 1 is a schematic view illustrating a head-up display in which the combiner unit according to an embodiment of the present invention is mounted.

A head-up display 1 of Fig. 1 allows a crew member of a vehicle to visually recognize various types of information such as navigation information overlapped with an outside view in front of a front glass FG, and includes a display device 10, a combiner unit 20, a housing 30, and an operating unit 40. In addition, the combiner unit 20 includes a combiner 210 and an angle adjusting mechanism 220.

The display device 10 emits a light beam that draws an image indicating various types of information such as the navigation information toward the combiner 210 of the combiner unit 20. The display device 10 corresponds to an example of the light source according to the present invention.

The combiner 210 is a well-known half mirror which includes a reflecting surface 210a formed by depositing an optical transmissive film made of tin, silver, or the like on a concave surface of a bent transparent resin plate to serve as the reflecting surface. The angle adjusting mechanism 220 holds the combiner 210 in a state where the combiner is erected with respect to a horizontal plane and the concave surface faces the display device 10 and the crew member of the vehicle. Further, the angle adjusting mechanism 220 holds the combiner 210 to be rotatable about a virtual axis 210b traversing an almost center in the vertical direction of the combiner. In addition, the virtual axis 210b is an axis that is in contact with the reflecting surface 210a. The combiner 210 corresponds to an example of the combiner according to the present invention, and the angle adjusting mechanism 220 corresponds to an example of the angle adjusting mechanism according to the present invention. In addition, the reflecting surface 210a corresponds to an example of the reflecting surface according to the present invention, and the virtual axis 210b corresponds to an example of the virtual axis according to the present invention.

The reflecting surface 210a of the combiner 210 reflects a light beam emitted from the display device 10 toward the crew member of the vehicle, so that an image drawn by the light beam and indicating various types of information such as the navigation information is projected in a field of view of the crew member. As described above, since the combiner 210 is the half mirror, the projected image overlapped with the outside view in front of the front glass FG is visually recognized by the crew member over the combiner 210. In addition, since the combiner 210 is bent, the above-describe image floating about 2 to 3 m ahead is visually recognized by the crew member. Hereinafter, the image visually recognized by the crew member will be referred to as a virtual image P. Here, when the eye of the crew member is located in a visually recognizable region called an eye box, the crew member can visually recognize the virtual image P.

Note that, in the present embodiment, the head-up display 1 is mounted in a dashboard (not illustrated) such that the combiner 210 protrudes outside the dashboard. However, unlike the present embodiment, the combiner 210 may be configured to be housed in the dashboard when not used, and to be pushed out of the dashboard when used.

Fig. 2 is a schematic view illustrating the eye box of the head-up display.

As illustrated in Fig. 2, the combiner 210 has a shape formed by bending a substantially rectangular plate in the vertical direction and the horizontal direction. Then, an eye box Eb has a shape of a rectangular parallelepiped according to the shape of the combiner 210. In Fig. 2, a vertical dimension of a surface of the eye box Eb on a combiner 210 side is denoted by "V, " a horizontal dimension of the surface thereof is denoted by "H, " and the height of the eye box Eb from a predetermined reference surface is denoted by "T."

Here, when the eye of the crew member is located outside the eye box Eb, the crew member cannot visually recognize the virtual image P. On the other hand, the position of the eye of the crew member in the vehicle, in particular, the height thereof is different depending on the stature or posture of the crew member. For this reason, in the head-up display 1 illustrated in Fig. 1, the height of the eye box Eb can be adjusted to a desired height by the crew member.

Here, the height T of the eye box Eb increases as the combiner 210 rotates in an upward direction, and conversely decreases as the combiner 210 rotates in a downward direction. The angle adjusting mechanism 220 illustrated in Fig. 1 has a function of rotating the combiner 210 about the virtual axis 210b to adjust an inclined angle (a tilt angle) of the combiner 210 with respect to the vertical plane. Due to this angle adjustment, the height of the eye box Eb is adjusted to a desire height.

The head-up display 1 of the present embodiment is provided with the operating unit 40 (see Fig. 1) for the crew member to operate the angle adjusting mechanism 220. The operating unit 40 is disposed at a position at which the crew member of the vehicle can operate without making any particular change in the posture while driving. Examples of such a position include the side of the seat, the upper portion of a handle, and the front panel of the dashboard. The crew member adjusts the tilt angle by operating the operating unit 40 to cause the angle adjusting mechanism 220 to rotate the combiner 210, and sets the height of the eye box Eb to the height of the crew's own eye.

Note that a method of adjusting the height T of the eye box Eb is not limited to the method in which the crew member operates the operating unit 40 for the adjustment as described in the present embodiment. For example, the method of adjusting the height T of the eye box Eb may be a method of providing a sensor which detects the height of the eye of the crew member and rotating the combiner 210 according to the detection result. In such a method, the height of the eye box Eb is automatically set to the height of the eye of the crew member.

Next, the combiner unit 20 schematically illustrated in Fig. 1 will be described in detail.

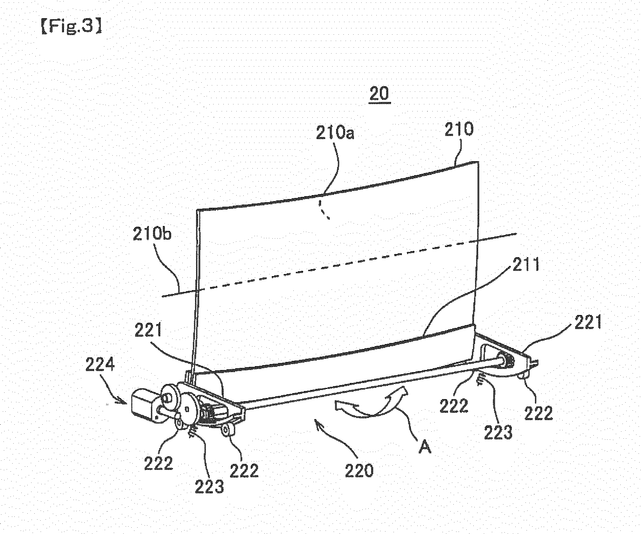

Fig. 3 is a perspective exterior view of the combiner unit.

In the combiner unit 20, a lower edge of the combiner 210 is fitted in a fixing member 211, and fixed to the fixing member 211. The angle adjustingmechanism220 includes a pair of holding members 221 which are fixed respectively on left and right sides of the fixing member 211. Then, the angle adjusting mechanism 220 includes four rotation rollers 222 which support the pair of holding members 221, and a pair of springs 223 which apply a force to the respective holding members 221 in a direction to push the holding members against the rotation rollers 222. Then, the angle adjusting mechanism 220 includes a driving unit 224 which rotates the pair of holding members 221 together as described below in a direction of arrow A about the virtual axis 210b illustrated in Fig. 1 that traverses the almost center in the vertical direction of the combiner 210 and that is in contact with the reflecting surface 210a. The holding members 221 each correspond to an example of the holding member according to the present invention, and the rotation rollers 222 corresponds to an example of the rotation rollers according to the present invention.

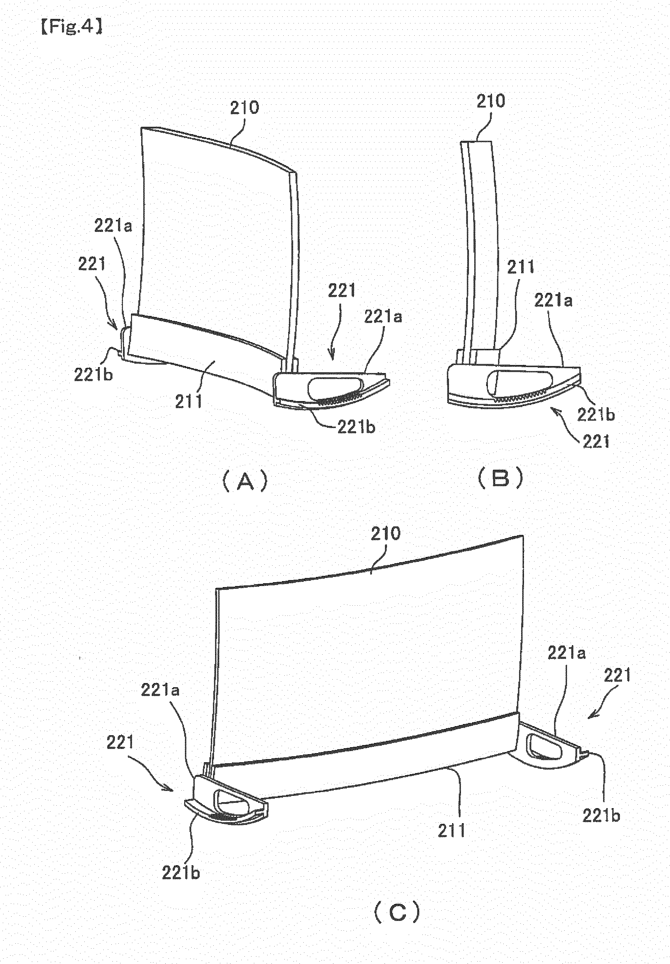

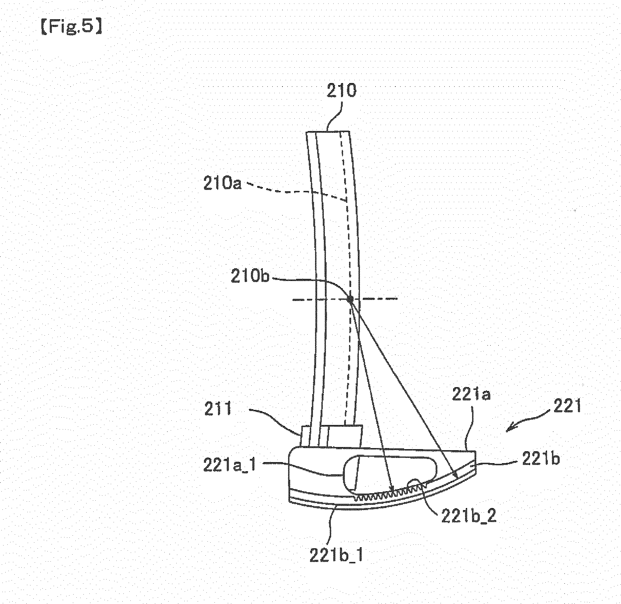

Figs. 4 (A) to 4 (C) are diagrams illustrating the pair of holding members illustrated in Fig. 3 together with the combiner which is held through the fixing member. Fig. 4 (A) illustrates a perspective view of the holding members 221 which hold the combiner 210 through the fixing member 211 when viewed from a concave surface side of the combiner 210. Fig. 4 (B) illustrates a side view of the holding members 221 which hold the combiner 210, and Fig. 4 (C) illustrates a perspective view when viewed from a convex surface side of the combiner 210. In addition, Fig. 5 is an enlarged view illustrating the side view in Fig. 4(B) alone.

Each of the holding members 221 includes a vertical wall portion 221a and a curved wall portion 221b. The vertical wall portion 221a is a wall perpendicular to the fixing member 211, and fixed to any one of left and right end portions of the fixing member 211. The curved wall portion 221b is a wall protruding from the vertical wall portion 221a in a direction away from the fixing member 211, and is curved as follows.

As illustrated in Fig. 5, the curved wall portion 221b is a curved wall forming a part of a peripheral wall in a cylindrical shape having the virtual axis 210b of the combiner 210 as its center. A convex surface of the curved wall portion 221b is a curved surface 221b_1 which forms a part of an outer peripheral surface in the above-described cylindrical shape. On the other hand, in a concave surface that is the back side of the curved surface 221b_1, an inner gear 221b_2 which has the virtual axis 210b as the center of a pitch circle is formed. In addition, in the vertical wall portion 221a, an elliptical hole 221a_1 is made over a range where the inner gear 221b_2 is formed. The curved surface 221b_1 corresponds to an example of the curved surface according to the present invention, and the inner gear 221b_2 corresponds to an example of the inner gear according to the present invention.

The pair of holding members 221 described above is supported by the four rotation rollers 222 in total as illustrated in Fig. 3. The two rotation rollers 222 are provided in each of the pair of holding members 221.

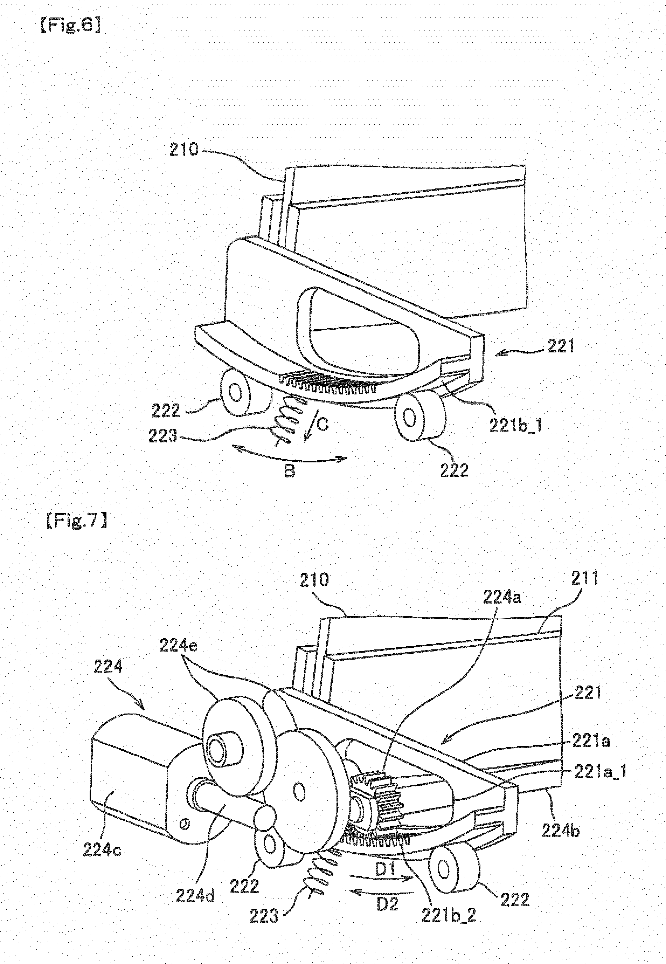

Fig. 6 is a diagram illustrating a state in which one of the pair of holding members on the left side when viewed from the convex surface side of the combiner is supported by the two rotation rollers.

As illustrated in Fig. 6, peripheral surfaces of the two rotation rollers 222 are in contact with the curved surface 221b_1 of the holding member 221. Here, the rotation rollers 222 are rotatably supported by the housing 30 of the head-up display 1 illustrated in Fig. 1. As described above, the curved surface 221b_1 is the curved surface forming apart of the outer peripheral surface in the cylindrical shape having the virtual axis 210b of the combiner 210 as its center. In other words, the rotation direction in which each of the rotation rollers 222 is rotatably supported becomes a rotation direction about the virtual axis 210b of the combiner 210 denoted by arrow B of Fig. 6. Therefore, each of the pair of holding members 221 and consequently the fixing member 211 holding the lower edge of the combiner 210 are supported to be rotatable about the virtual axis 210b of the combiner 210.

In addition, as also illustrated in Fig. 3, the pair of holding members 221 are each pushed against the two rotation rollers 222 by each of the springs 223 which applies a force to each of the holding members 221 in a direction of arrow C. One end of each of the springs 223 is fixed to each of the holding members 221, and serves as a tensile coil spring which is fixed to the housing 30 of the head-up display 1 illustrated in Fig. 1.

Then, the holding members 221 which are rotatably supported as described above are each rotated about the virtual axis 210b of the combiner 210 by the driving unit 224 illustrated in Fig. 3. The driving unit 224 corresponds to an example of the driving unit according to the present invention.

Fig. 7 is an enlarged view of the driving unit which rotates the holding member.

The driving unit 224 includes a pair of circular gears 224a which each engage with the inner gear 221b_2 of each of the holding members 221. Further, since Fig. 7 illustrates an enlarged view of a motor 224c to be described below and the like, Fig. 7 illustrates only one of the pair of circular gears 224a on the left side when viewed from the convex surface of the combiner 210. Shafts of the pair of circular gears 224a are connected with each other by one gear rotation shaft 224b. The gear rotation shaft 224b connects the pair of circular gears 224a through the elliptical hole 221a_1 made in the vertical wall portion 221a of each of the holding members 221. Then, the gear rotation shaft 224b is rotatably supported by the housing 30 of the head-up display 1 by which the two rotation rollers 222 are supported and to which one end of each of the springs 223 is fixed. Therefore, the pair of circular gears 224a receives a rotary driving force from the motor 224c to be described below, and rotate together about the gear rotation shaft 224b. The circular gears 224a correspond to an example of the circular gears according to the present invention, and the gear rotation shaft 224b corresponds to an example of the rotation shaft according to the present invention.

In addition, the driving unit 224 includes the motor 224c, a worm gear 224d, and two transmission gears 224e. The motor 224c generates a rotary driving force to rotate the circular gears 224a. The two transmission gears 224e transfer the rotary driving force transmitted from the motor 224c through the worm gear 224d to the circular gear 224a of the pair of the circular gears 224a on the left side when viewed from the convex surface side of the combiner 210. A combination of the motor 224c, the worm gear 224d, and the two transmission gears 224e corresponds to an example of the driver according to the present invention.

Note that a mode of directly rotating the gear rotation shaft 224b and the two circular gears 224a by the motor 224c, the worm gear 224d, and the two transmission gears 224e is described as an example of the driver according to in the present invention. However, the driver according to the present invention is not limited thereto. For example, the driver according to the present invention may be a driver which rotates the holding members 221 by, for example, rotating the rotation rollers 222 supporting the holding members 221. In this case, the gear rotation shaft 224b and the two circular gears 224a are indirectly rotated by the driver. Then, the gear rotation shaft 224b and the two circular gears 224a do not contribute to the rotation of the holding members 221, but have a function of pushing the holding members 221 from the upside.

The motor 224c is fixed to the housing 30 of the head-up display 1, and the two transmission gears 224e are rotatably supported by the housing 30. When the rotary driving force from the motor 224c is transferred to the circular gear 224a on the left side, the rotary driving force is also transmitted to one of the circular gears 224a on the right side through the gear rotation shaft 224b, and the pair of circular gears 224a is rotated together. Then, each of the holding members 221 and consequently the fixing member 211 supporting the lower edge of the combiner 210 are rotated by the rotation of the circular gears 224a. A rotation direction of each of the holding members 221 becomes a direction of arrow D1 or a direction of arrow D2 according to a rotation direction of the motor 224c. Then, the rotation direction of the motor 224c becomes a direction according to the operation of the crew member on the operating unit 40 illustrated in Fig. 1. As a result, the tilt angle of the combiner 210 is adjusted, and the height T of the eye box Eb illustrated in Fig. 2 is adjusted to the height matching the height of the eye of the crew member.

In addition, in the present embodiment, the rotation center of the combiner 210 is set on the virtual axis 210b. For example, a mechanism to rotate the rotation shaft protruding from the center in the vertical direction of the edge on each side of the combiner can be considered instead of setting the rotation center of the combiner 210 on the virtual axis. However, in such a mechanism, the crew member tends to have the eye on the rotation shaft at the edge on each side of the combiner and a peripheral structure thereof . As a result, it becomes difficult for the eye of the crew member to focus on the virtual image over the combiner, and there is a risk that the virtual image becomes difficult to view. In the present embodiment, the rotation center of the combiner 210 is merely set on the virtual axis 210b, and there is no such structure hindering the visual recognition of the virtual image around the combiner 210. For this reason, according to the present embodiment, the virtual image is easy to view compared to the mechanism to provide the rotation shaft and the peripheral structure thereof at the edge on each side of the combiner as described above.

Note that, in the present embodiment, the inner gear 221b_2 of each of the holding members 221 is provided with the minimum number of teeth necessary for being able to adjust the height of the eye box over a range assumed as the height of the eye of the crew member. Therefore, the downsizing and weight saving of the holding members 221 and consequently the downsizing and weight saving of the combiner unit 20 are promoted.

Here, unlike the present embodiment, a mechanism to rotate the combiner 210 about the rotation axis provided on the upper edge side or the lower edge side of the combiner 210 can be considered as the mechanism to adjust the tilt angle of the combiner 210 in order to adjust the height of the eye box. In contrast to such a mechanism, the combiner unit 20 of the present embodiment illustrated in Fig. 3 has the following advantages. Here, the mechanism as described in the present embodiment in which the rotation axis of the combiner is the virtual axis at the center in the vertical direction and the lower edge is moved to rotate the combiner is called a centerless tilt mechanism. In addition, unlike the embodiment, the mechanism in which the rotation axis is on the lower edge side of the combiner and the combiner is rotated about the rotation axis is called a bottom tilt mechanism. Hereinafter, advantages of the centerless tilt mechanism over the bottom tilt mechanism will be described through the comparison between the both mechanisms.

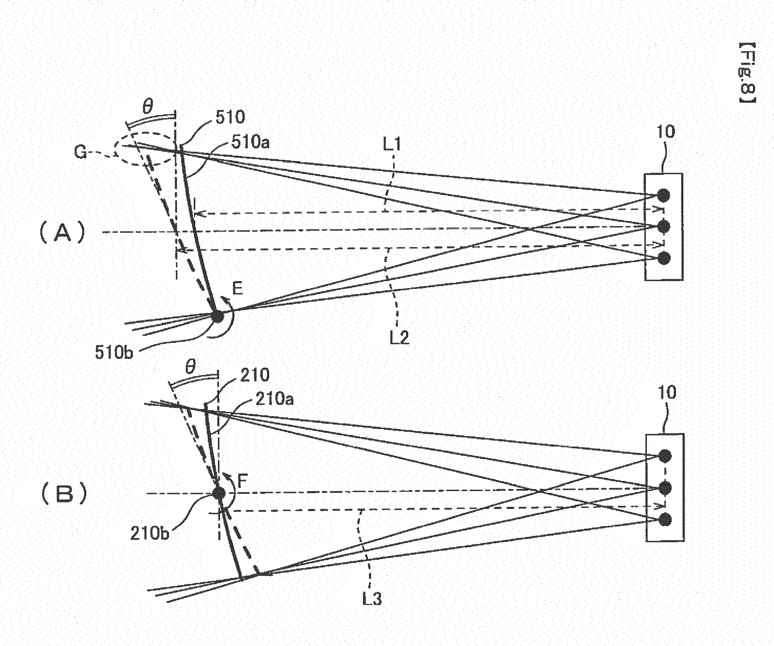

Figs. 8(A) and 8(B) are schematic views illustrating a positional relation between a light beam emitted from the display device and the combiner when the combiner is viewed from the side, in each of the bottom tilt mechanism and the centerless tilt mechanism. Fig. 8 (A) illustrates a schematic view of the bottom tilt mechanism, and Fig. 8(B) illustrates a schematic view of the centerless tilt mechanism. Note that, in Figs. 8 (A) and 8 (B), for the sake of simplicity in the description, a position of the display device 10 is depicted as a front surface of the combiner unlike Fig. 1. In addition, in contrast to Fig. 1, Fig. 8 (A) and 8 (B) illustrate the display device 10 on the right side in the figure and the combiner on the left side in the figure .

In the bottom tilt mechanism illustrated in Fig. 8(A), when a combiner 510 is rotated, an optical axis distance between the combiner 510 and the display device 10 changes. Here, the optical axis distance means a distance between the center of the display device 10 and the center of a reflecting surface 510a of the combiner 510. For example, as illustrated in Fig. 8 (A), the combiner 510 is rotated in a direction of arrow E about a rotation shaft 510b on the lower end side, that is, the combiner 510 falls toward the front glass. In this case, in the bottom tilt mechanism, an optical axis distance L1 before rotation extends to be an optical axis distance L2 after rotation.

On the other hand, in the centerless tilt mechanism illustrated in Fig. 8 (B), since the combiner 210 is rotated about the virtual axis 210b traversing the center of the reflecting surface 210a, an optical axis distance L3 is substantially maintained before and after rotation, as illustrated in Fig. 8 (B) .

Such a difference in a change in the optical axis distance between the bottom tilt mechanism and the centerless tilt mechanism appears as the following difference in the way of showing the virtual image illustrated in Fig. 1 or 2. First, a distance from the eye of the crew member to the virtual image, that is, a position at which the virtual image P can be viewed is different between the bottom tilt mechanism and the centerless tilt mechanism as follows.

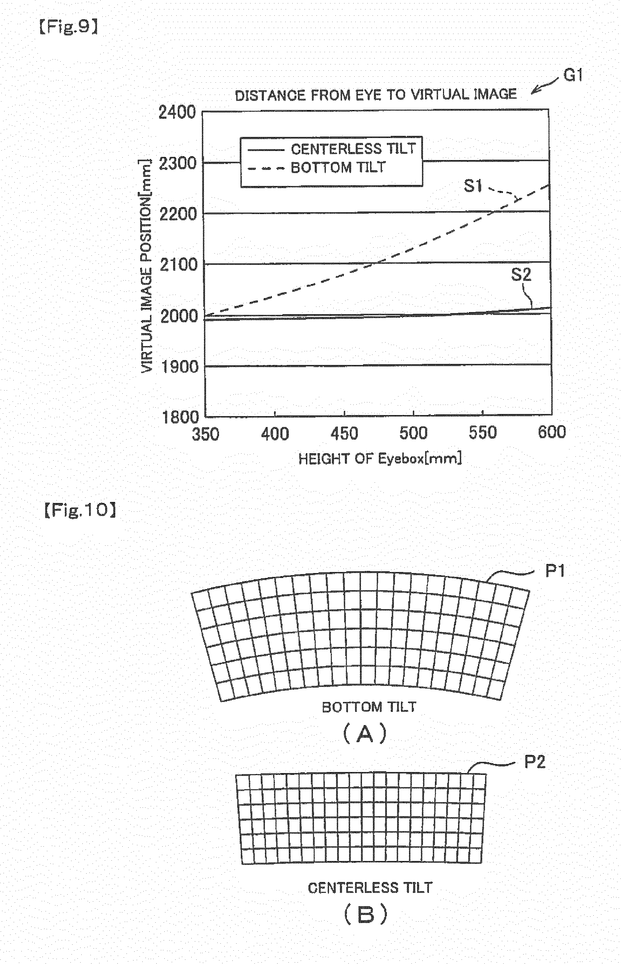

Fig. 9 is a graph illustrating a change in a position of the virtual image in each of the bottom tilt mechanism and the centerless tilt mechanism when the combiner falls toward the front glass and the tilt angle becomes larger.

In graph G1 of Fig. 9, the horizontal axis indicates the height of the eye box. When the combiner falls toward the front glass and the tilt angle becomes larger, the height of the eye box increases. In graph G1, the height of the eye box is used as an index indicating the extent in which the combiner has fallen. Then, in graph G1, a distance from the eye of the crew member to the virtual image based on an assumption that the eye of the crew member is located at the center of the eye box is indicated in the vertical axis. In graph G1, a change in the position of the virtual image in the bottom tilt mechanism is indicated by a broken line S1, and a change in the position of the virtual image in the centerless tilt mechanism is indicated by a solid line S2.

As can be seen from graph G1 of Fig. 9, when the combiner falls toward the front glass, the optical axis distance extends in the bottom tilt mechanism, and thus the position of the virtual image becomes more distant. On the other hand, in the centerless tilt mechanism, the position of the virtual image almost does not change but is kept at an almost fixed position.

Further, the difference in the change in the optical axis distance between the bottom tilt mechanism and the centerless tilt mechanism influences the shape and size of the virtual image as follows.

Figs. 10(A) and (B) are diagrams schematically illustrating the virtual image in each of the bottom tilt mechanism and the centerless tilt mechanism when the combiner falls. Fig. 10(A) illustrates a virtual image P1 in the bottom tilt mechanism, and Fig. 10(B) illustrates a virtual image P2 in the centerless tilt mechanism.

The combiner is a type of concave mirror having a concave surface that reflects the light beam from the display device 10. Therefore, the virtual image drawn by the reflected light assumes a shape magnified, bent, and distorted with respect to an output image of the display device 10. Then, extents of the magnification and distortion are larger as the optical axis distance is longer. As described above, in the centerless tilt mechanism, even when the combiner 210 falls, the optical axis distance is substantially maintained, while in the bottom tilt mechanism the optical axis distance extends. For this reason, as illustrated in Figs. 10(A) and (B), in the centerless tilt mechanism, even when the combiner 210 falls, a change in the size or shape of the virtual image P2 is suppressed, while the virtual image P1 in the bottom tilt mechanism is magnified and distorted as the combiner 510 falls.

Here, an example of evaluation of the extent of the distortion of the image as described above includes evaluation using an index "Distortion" expressed by the following equation.

[Mathematical Formula 1]

$$\mathrm{Distortion}[\%] = \frac{|\,h1 - h2\,|}{h1} \times 100$$

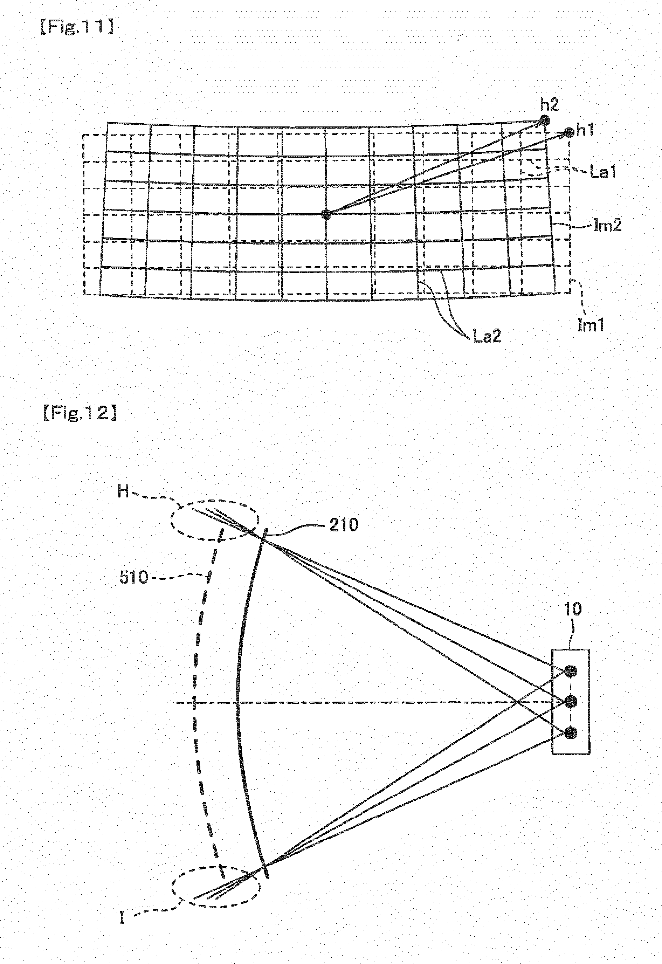

Fig. 11 is a diagram illustrating a parameter which is used in the defining equation of "Distortion."

In Fig. 11, an image Im1 before distortion is indicated by a broken line, and an image Im2 after distortion is indicated by a solid line. In order to calculate "Distortion," first a lattice La1 dividing the image Im1 into pieces is drawn in the image Im1 before distortion. Then, a lattice La2 after distortion in a case where the lattice La1 before distortion is distorted similarly to the image Im2 is determined for the image Im2 after distortion.

The parameter "h1" in the defining equation "Distortion" is a distance between an arbitrary intersection in the lattice La1 before distortion and a corner farthest separated from the intersection in the image Im1 before distortion. Then, the parameter "h2" in the defining equation is a distance between a corresponding intersection in the lattice La2 after distortion and a corresponding corner. In Fig. 11, an intersection at the center is selected as the arbitrary intersection in the lattice La1 before distortion. In Fig. 11, the image Im1 before distortion and the image Im2 after distortion are illustrated such that the intersection at the center of the lattice La1 before distortion matches the intersection at the center of the lattice La2 after distortion.

"Distortion" expressed by the defining equation is a ratio indicating an extent of a change in a distance between an arbitrary intersection in a lattice drawn in an image and a corner farthest separated from the intersection in the image when the image is distorted.

In order to evaluate the distortion of the entire image, "Distortion" is calculated for all intersections of lattices as illustrated in Fig. 11. Then, a maximum value of the thus determined "Distortions" is used as an evaluation value of the distortion. The distortion of the virtual image when an actually available combiner is rotated until the height of the eye box reaches a predetermined height was calculated, and the following results are obtained. That is, an evaluation value in the bottom tilt mechanism was 13.6%, while an evaluation value in the centerless tilt mechanism was 12.1%. In other words, according to the centerless tilt mechanism, the distortion of the virtual image when the combiner is rotated is suppressed about 10% compared to the bottom tilt mechanism.

In addition, even when the tilt angle of the combiner 210 increases, the optical axis distance is maintained substantially constant in the centerless tilt mechanism, while in the bottom tilt mechanism the optical axis distance changes. In other words, even when the tilt angle increases, the extent of the distortion of the virtual image does not change too much in the centerless tilt mechanism, while in the bottom tilt mechanism the distortion degree changes as the tilt angle increases. In general, in the head-up display, the distortion of the virtual image is modified by correcting the image in the display device 10. Since the extent of the distortion changes as the tilt angle increases in the bottom tilt mechanism, correction content of the image in the display device 10 has to be also changed according to the tilt angle and correction processing becomes complicated. On the other hand, since the extent of the distortion of the virtual image is maintained substantially constant in the centerless tilt mechanism regardless of the tilt angle, the correction content of the image in the display device 10 does not have to be changed according to the tilt angle. In other words, according to the centerless tilt mechanism, the correction processing for the image in the display device 10 becomes simple compared to the bottom tilt mechanism.

As described above, according to the centerless tilt mechanism employed in the combiner unit 20 of the present embodiment, a change in the position of the virtual image when the height of the eye box is changed or the shape and size of the virtual image are suppressed compared to the bottom tilt mechanism. In addition, according to the centerless tilt mechanism, the processing for modifying the distortion of the virtual image becomes simple compared to the bottom tilt mechanism.

Further, in the bottom tilt mechanism, when the combiner is rotated to change the height of the eye box, the size of the eye box reduces as described below. According to the centerless tilt mechanism, the reduction in the size of the eye box is suppressed. The reduction in the size of the eye box will be described with reference to Figs. 8(A), 8(B), 13, and 14.

First, as can be seen from Figs. 8 (A) and 8 (B), in a case where the combiner is rotated to make a tilt angle $\theta$ of the combiner the same angle, an upper edge of the combiner is farther separated from the display device 10 in the bottom tilt mechanism compared to in the centerless tilt mechanism. For this reason, in the bottom tilt mechanism, as illustrated in a region surrounded by an ellipse G of a dotted line in Fig. 8(A), a part of the light beam from the display device 10 may go outside the combiner 510. In this way, the light beam going outside the combiner 510 cannot visibly be recognized by the crew member. Then, an amount of the light beam going outside the combiner 510 in such a way increases as the tilt angle of the combiner 510 is larger. In other words, in the bottom tilt mechanism, as the tilt angle of the combiner 510 becomes large, the vertical dimension of the eye box (see the vertical dimension V of the eye box Eb of Fig. 2) becomes small.

On the other hand, in the centerless tilt mechanism, when the tilt angle is the same, a movement distance of the upper edge of the combiner 210 is short compared to in the bottom tilt mechanism. For this reason, as illustrated in Fig. 8 (B), even when the combiner 210 is rotated, the light beam from the display device 10 falls inside the combiner 210. As a result, the reduction in the vertical dimension of the eye box as can be seen in the bottom tilt mechanism is suppressed.

Fig. 12 is a schematic view illustrating a positional relation between a light beam emitted from the display device and the combiner when the combiner is viewed from the upside, in each of the bottom tilt mechanism and the centerless tilt mechanism. In Fig. 12, the position of the upper edge of the combiner 510 when the combiner 510 is rotated in the bottom tilt mechanism is indicated by a dotted line. Then, the position of the upper edge of the combiner 210 when the combiner 210 is rotated in the centerless tilt mechanism is indicated by a solid line. As described above, in the bottom tilt mechanism having a large movement distance of the upper edge, a part of the light beam from the display device 10 goes outside both left and right end portions in the vicinity of the upper edge as illustrated in regions surrounded by ellipses H and I indicated by the dotted line in Fig. 12 . Then, an amount of the light beam going outside the both left and right end portions also increases as the tilt angle of the combiner 510 is larger. In other words, in the bottom tilt mechanism, as the tilt angle of the combiner 510 becomes large, the horizontal dimension of the eye box (see the horizontal dimension H of the eye box Eb of Fig. 2) also becomes small.

On the other hand, in the centerless tilt mechanism, the movement distance of the upper edge of the combiner 210 is short as described above. For this reason, as illustrated in Fig. 12, even when the combiner 210 is rotated, the light beam from the display device 10 falls inside the combiner 210. As a result, the reduction in the horizontal dimension of the eye box as can be seen in the bottom tilt mechanism is also suppressed.

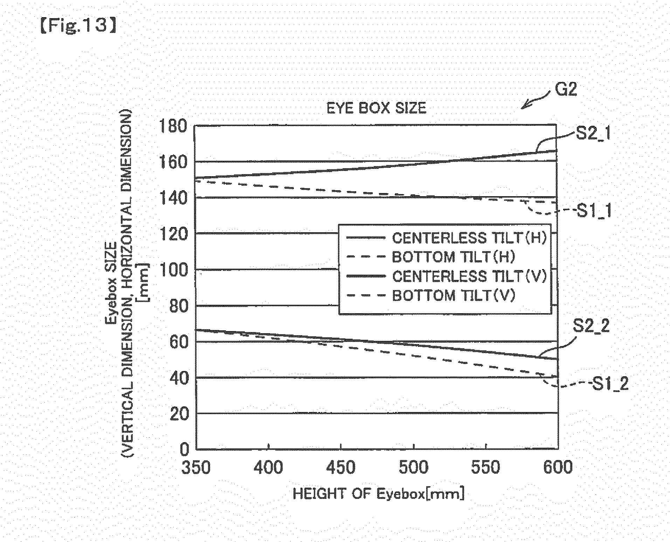

Fig. 13 is a graph illustrating a change in the size of the eye box when the height of the eye box is changed by changing the tilt angle of the combiner.

In graph G2 of Fig. 13, the horizontal axis represents the height of the eye box, and the vertical axis represents the vertical dimension and the horizontal dimension as the size of the eye box. Then, in graph G2, a change in the horizontal dimension of the size of the eye box in the bottom tilt mechanism is indicated by a broken line S1_1, and a change in the vertical dimension thereof is indicated by a broken line S1_2 . In addition, in graph G2, a change in the horizontal dimension of the size of the eye box in the centerless tilt mechanism is indicated by a solid line S2_1, and a change in the vertical dimension thereof is indicated by a solid line S2_2. It can be seen from comparison of these broken lines and solid lines that, according to the centerless tilt mechanism, the reduction in the size of the eye box when the height of the eye box is changed is suppressed compared to the lower edge tilt mechanism in both the horizontal dimension and the vertical dimension.

In addition, in a case where the tilt angle of the combiner is the same angle, the height of the eye box in the bottom tilt mechanism decreases compared to the height of the eye box in the centerless tilt mechanism as described below.

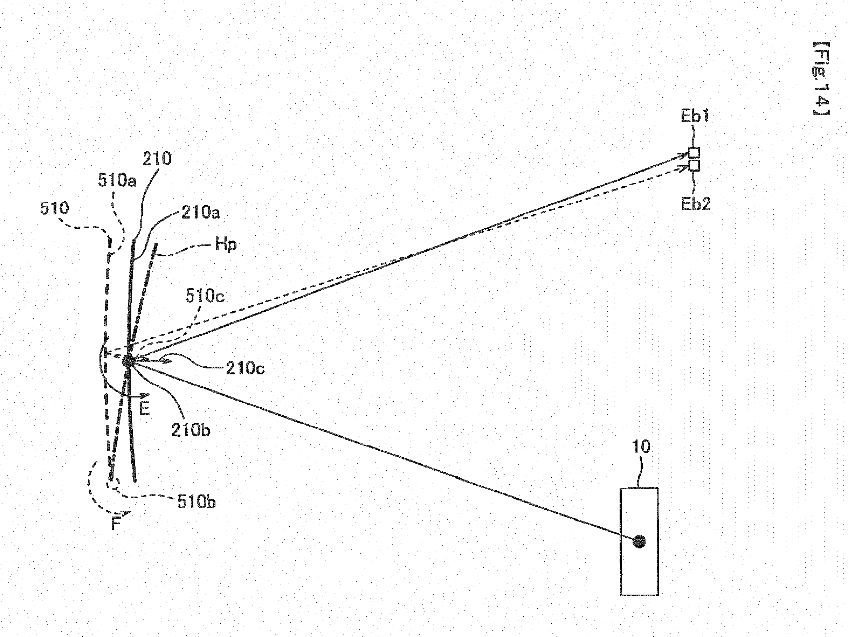

Fig. 14 is a diagram illustrating a positional relation between a light beam emitted from the display device, the combiner, and the eye box when the combiner is viewed from the side, in each of the bottom tilt mechanism and the centerless tilt mechanism.

In Fig. 14, the combiner 510 of the bottom tilt mechanism is indicated by a broken line, and the combiner 210 of the centerless tilt mechanism in which the tilt angle is the same angle as that of the combiner 510 of the bottom tilt mechanism is indicated by a solid line. In addition, in Fig. 14, the tilt angle of the combiner at an initial position is also the same angle in the bottom tilt mechanism and the centerless tilt mechanism. In Fig. 14, the bottom tilt mechanism and the centerless tilt mechanism are illustrated to be overlapped with each other such that the initial positions of the combiners match each other. In Fig. 14, a common initial position Hp of the combiner between the bottom tilt mechanism and the centerless tilt mechanism is indicated by a chain line.

In the centerless tilt mechanism, the light beam that exits the center of the display device 10 to go toward the center of the reflecting surface 210b of the combiner 210 is symmetrically reflected with respect to a normal line 210c at the center of the reflecting surface, and an eye box Eb1 is formed at a destination of the reflected light beam as illustrated in Fig. 14. Note that, in Fig. 14, for the sake of easy understanding on the figure, the center in the surface on the combiner 210 side of the eye box Eb1 is indicated by a box mark. When the combiner 210 is rotated from the initial position Hp in a direction of arrow E, the normal line 210c at the center becomes oriented upward, and accordingly the height of the eye box Eb1 increases . In the centerless tilt mechanism, since the combiner 210 is rotated about the virtual axis 210b at the center in the vertical direction, the light beam that exits the center of the display device 10 is symmetrically reflected with respect to the normal line 210c at the center of the combiner even when the tilt angle is arbitrarily changed.

On the other hand, in the bottom tilt mechanism, when the combiner 510 is rotated in a direction of arrow F about the rotation shaft 510b on the lower edge side, the reflecting surface 510a becomes oriented upward while being away from the display device 10. As a result, in the initial position Hp, the light beam reflected at the center is symmetrically reflected with respect to a normal line 510c at a position shifted upward from the center, and an eye box Eb2 is formed. At this time, the normal line 510c at the position shifted upward is oriented downward compared to the normal line 210c in the combiner 210 of the centerless tilt mechanism in which the tilt angle is the same angle, as illustrated in Fig. 14. As a result, as indicated by the dotted line in Fig. 14, an optical path of the light beam symmetrically reflected with respect to the normal line 510c oriented downward passes below an optical path indicated by the solid line of the light beam reflected by the combiner 210 of the centerless tilt mechanism. For this reason, in the bottom tilt mechanism, even when the tilt angle is the same angle, the height of the eye box Eb2 decreases compared to the height of the eye box Eb1 in the centerless tilt mechanism. Then, such a shift of the height becomes large as the tilt angle becomes large and the reflecting surface 510a of the combiner 510 becomes away from the display device 10.

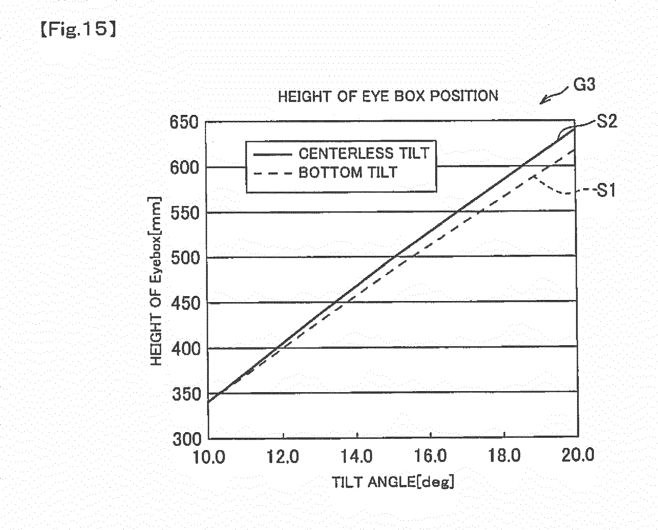

Fig. 15 is a graph illustrating a change in the height of the eye box when the tilt angle of the combiner is changed.

In graph G3 of Fig. 15, the horizontal axis represents the tilt angle, and the vertical axis represents the height of the eye box. Then, in graph G3, a change in the height of the eye box in the bottom tilt mechanism is indicated by a broken line S1, and a change in the height of the eye box in the centerless tilt mechanism is indicated by a solid line S2. It can be seen from comparison of these broken line and solid line that, in a case where the tilt angle is the same angle, the height of the eye box in the lower edge tilt mechanism decreases compared to that in the centerless tilt mechanism. In addition, it can also be seen from graph G3 of Fig. 15 that the shift of the height of the eye box between the centerless tilt mechanism and the lower edge tilt mechanism becomes widened as the tilt angle becomes large.

In consideration of such a shift of the height of the eye box, a rotation mechanism has to be designed in the lower edge tilt mechanism in order that the combiner can be rotated by a larger tilt angle than that in the centerless tilt mechanism and the eye box can be moved up to a sufficient height.

On the other hand, in the centerless tilt mechanism, since the height of the eye box increases compared to that in the lower edge tilt mechanism as described above, an upper limit of the tilt angle can be made smaller than that in the lower edge tilt mechanism. For this reason, for example, it is possible to reduce the number of the teeth of the inner gear 221b_2 illustrated in Fig. 7. Then, in the present embodiment, the downsizing and weight saving of the holding members 221 and consequently the downsizing and weight saving of the combiner unit 20 are promoted by suppressing the number of teeth, and the like.

In addition, as described above, in a case where the tilt angle is the same angle, the movement distance of the upper edge of the combiner in the centerless tilt mechanism is smaller than that in the lower edge tilt mechanism. This results in an advantage that the size of the combiner 210 can be made larger in the centerless tilt mechanism than that in the lower edge tilt mechanism.

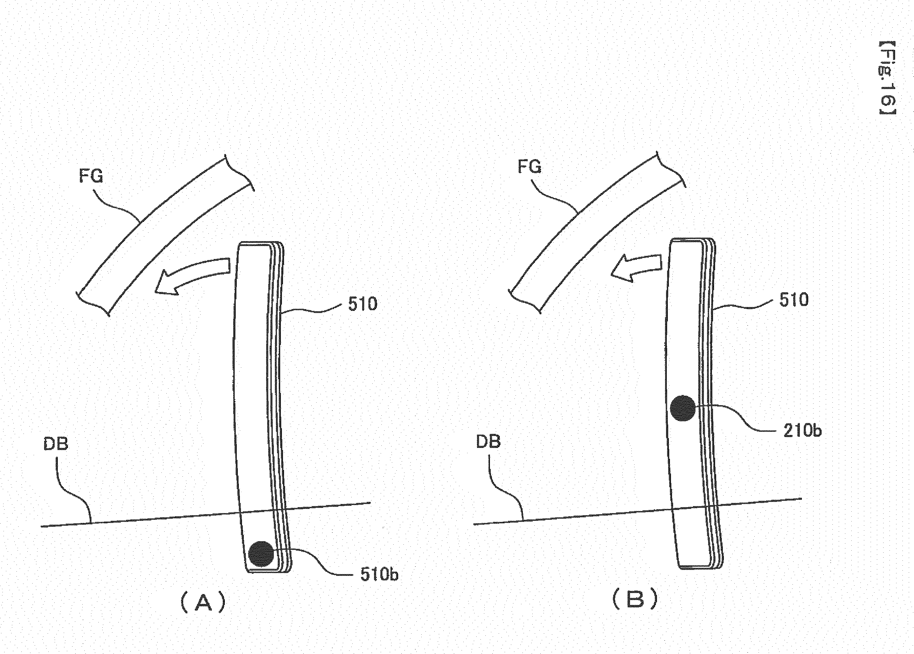

Figs. 16 (A) and 16 (B) are schematic views describing the advantage that the size of the combiner 210 can be made larger in the centerless tilt mechanism than that in the lower edge tilt mechanism. Fig. 16 (A) illustrates a schematic view of the lower edge tilt mechanism, and Fig. 16 (B) illustrates a schematic view of the centerless tilt mechanism.

As illustrated in Fig. 16 (A), in a case where the head-up display is mounted in a dashboard DB, since a distance from the rotation shaft 510b is long in the lower edge tilt mechanism, the movement distance of the upper edge of the combiner 510 is relatively large. Then, there is a possibility that the following situation occur in the lower edge tilt mechanism. That is, in the lower edge tilt mechanism, even when the tilt angle has the same extent as that in the centerless tilt mechanism, there is a possibility that the upper edge of the combiner 510 come in contact with the front glass FG. On the other hand, in the centerless tilt mechanism having a relatively short movement distance of the upper edge because the distance from the virtual axis 210b to the upper edge is short, the combiner 210 can be rotated with a sufficient margin for the front glass FG. For this reason, the centerless tilt mechanism employed in the present embodiment has an advantage that, even when the range of the tilt angle has the same extent, the size of the combiner 210 can be made large in consideration of the margin for the front glass FG compared to the lower edge tilt mechanism.

Hitherto, the advantages of the centerless tilt mechanism employed in the present embodiment over the bottom tilt mechanism has been described, and a supplementary description of the configuration of the combiner unit 210 illustrated in Fig. 7 will be given.

As described above, in the present embodiment, each of the pair of holding members 221 is pushed against the two rotation rollers 222 by each of the springs 223. Then, the circular gear 224a for rotating one of the holding members 221 is engaged with the inner gear 221b_2 provided in the holding member 221. As a result of such a configuration, a force as described below acts on each of the holding members 221.

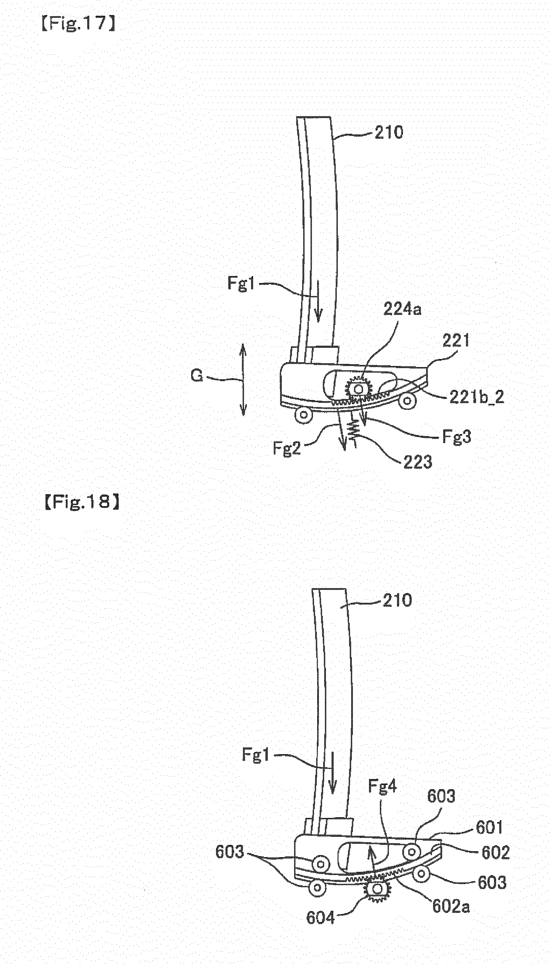

Fig. 17 is a schematic view illustrating a force that acts on the holding member.

As illustrated in Fig. 17, three forces of a load Fg1 caused by the weight of the combiner 210, a tensile load Fg2 caused by the spring 223, and a rotational reaction force Fg3 caused by the circular gear 224a act on the holding member 221. Vibration in a direct ion of arrow G is applied during the traveling of the vehicle to the combiner unit 20 assembled in the in-vehicle head-up display illustrated in Fig. 1. When the combiner 210 jolts due to such vibration, there is a possibility that the virtual image be blurred. In the present embodiment, since the three forces act on the holding member221, the jolt of the combiner 210 is suppressed and consequently the blurring of the virtual image is suppressed.

Here, an example of the driving unit which rotates the holding member 221 includes the following another example.

Fig. 18 is a schematic view illustrating main parts of a driving unit which rotates a holding member according to another example different from the present embodiment. Note that, in Fig. 18, the same components as those in the present embodiment illustrated in Fig. 17 will be denoted by the same symbols as those in Fig. 17. Hereinafter, the redundant description of the same components will not be repeated.

In this another example, unlike the present embodiment, an outer gear 602a is formed in a convex surface of a curved wall portion 602 of a holding member 601. In addition, two sets of a rotation roller pair 603 which interposes the curved wall portion 602 therebetween in the vertical direction are provided on both sides of the outer gear 602a. Then, a circular gear 604 which engages with the outer gear 602a is disposed below the holdingmember 601. In this another example, since the curved wall portion 602 is interposed between the rotation roller pair 603 to be positioned with respect to a housing of a head-up display, the spring 223 illustrated in Fig. 17 becomes unnecessary. Therefore, since a structure which fixes one end of the spring 223 to the housing becomes unnecessary, the structure is accordingly simplified compared to the present embodiment.

Here, a rotational reaction force Fg4 of the circular gear 604 engaging with the outer gear 602a acts on the holding member 601 in a direction opposite to a load Fg1 from a combiner 210, as illustrated in Fig. 18. The load Fg1 from the combiner 210 has a function of suppressing the above-described jolt, but in this another example, the rotational reaction force Fg4 of the circular gear 604 works in a direction to cancel the load Fg1. For this reason, the present embodiment described with reference to Figs. 1 to 17 is more advantageous from a viewpoint of the suppression of the jolt of the combiner 210. In addition, in the present embodiment, since the circular gear 224a engaging with the inner gear 221b_2 illustrated in Fig. 7 is contained inside the curved wall portion 221b, the present embodiment is also advantageous in the downsizing of the entire apparatus. In this another example illustrated in Fig. 18, since the circular gear 604 is disposed on the outside of the curved wall portion 602, this another example increases the size compared to the present embodiment. On the other hand, also in this another example illustrated in Fig. 18, it is a matter of course that a change before and after the rotation of the combiner is suppressed in the way of showing the image overlapped with the outside view, in a similar manner to the present embodiment.

In addition, in the present embodiment, a force of the spring 223 is applied to the holding member 221 as illustrated in Fig. 17, but an example of this method of applying a force includes the following another example.

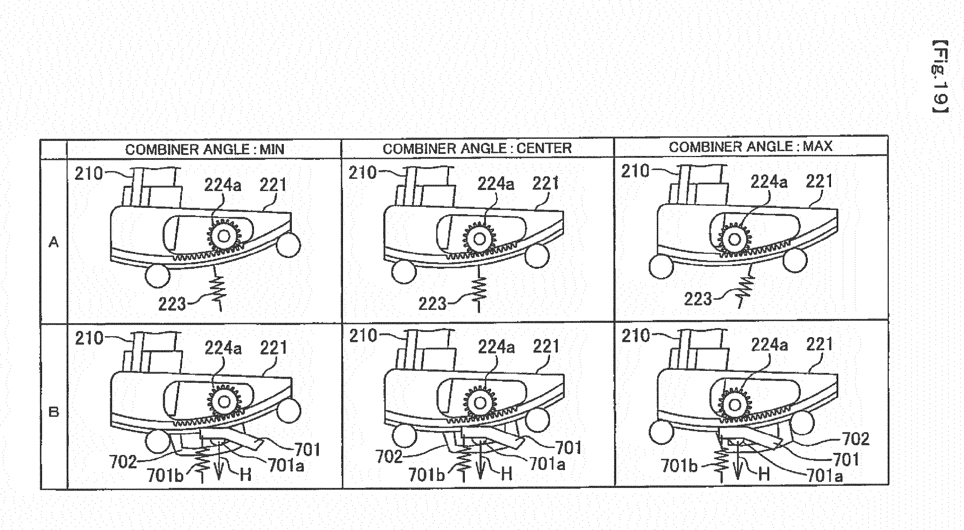

Fig. 19 is a diagram illustrating another example of a method of applying a force to a holding member, in comparison to the method of applying a force by using the spring in the present embodiment. Part (A) of Fig. 19 illustrates the method of applying a force by using the spring 223 in the present embodiment, and Part (B) of Fig. 19 illustrates the method of applying a force in this another example. Note that, in Part (B), the same components illustrated in Part (A) as those in the present embodiment will be denoted by the same symbols as those in the Part (A). Hereinafter, the redundant description of the same components will not be repeated.

In the method of applying a force in this another example illustrated in Part (B) of Fig. 19, a bias arm 701 is provided, and a bias bearing 702 to which a force is applied downward by the bias arm 701 is attached below a holding member 221. The bias arm 701 is supported by a housing of a head-up display to freely rotate about one end thereof. Then, the bias arm 701 is provided with a roller 701a which pushes the bias bearing 702 in the other end and a spring 701b which applies a force to the other end in a direction of arrow H.

Here, Part (A) and Part (B) of Fig. 19 illustrate three states of a state when the tilt angle of the combiner 210 has a minimum value, a state when the tilt angle has an intermediate value, and a state when the tilt angle has a maximum value. In the present embodiment illustrated in Part (A), a direction of the spring 223 having the one end fixed to the housing 30 of the head-up display 1 and the other end fixed to the holding member 221 is changed when the holding member 221 is rotated in order to change the tilt angle. On the other hand, since the present embodiment illustrated in Part (B) has a structure of pushing the bias bearing 702 by the roller 701a, even when the holding member 221 is rotated, a position of the bias arm 701 is substantially maintained. Therefore, the direction of the spring 701b fixed to the bias arm 701 is also substantially maintained even when the holding member 221 is rotated.

In the method of applying a force in this another example illustrated in Part (B) of Fig. 19, since the direction of the spring 701b applying a force to the holding member 221 is substantially maintained, a load that acts on a fixation place of the spring 701b is reduced compared to the present embodiment illustrated in Part (A). Therefore, the method of applying a force in this another example is suitable for the combiner unit of the head-up display which is expected to be used, for example, by a plurality of crew members having different heights and to be adjusted in the height of the eye box at a high frequency.

On the other hand, the method of applying a force in the present embodiment illustrated in Part (A) provides a simple structure relating to the application of a force to the holding member 221 and also a small number of the components, compared to the method of applying a force in this another example illustrated in Part (B). Therefore, the method of applying a force in the present embodiment is suitable for the combiner unit in a case where the cost down is desired instead of the suppression of the frequency of adjusting the height of the eye box.

Note that, in the embodiment described above, the combiner unit 20 of the head-up display 1 mounted in the dashboard of the vehicle illustrated in Fig. 1 has been described as an example of the combiner unit according to the present invention. In the combiner unit 20, the virtual image is visually recognized over the combiner 210 which is located below the field of view of the crew member. However, the combiner unit according to the present invention is not limited thereto. For example, the combiner unit according to the present invention may be attached to the ceiling of the vehicle, and the virtual image may visually be recognized over the combiner which is located above the field of view of the crew member. In this case, the upper edge of the combiner is held by the angle adjusting mechanism.

Note that, the above-mentioned embodiment is a mere representative mode of the present invention, and the present invention is not limited to the embodiment. In other words, various modifications can be carried out by a person skilled in the art without departing from the scope of the present invention according to the common knowledge in the related art. It is a matter of course that such modifications are also included in the scope of the present invention as long as the configuration of the combiner unit according to the present invention is provided.

Reference Signs List

| | |
|---|---|
| 1 | head-up display |
| 10 | display device |
| 20 | combiner unit |
| 30 | housing |
| 40 | operating unit |
| 210, 510 | combiner |
| 210a, 510a | reflecting surface |
| 210b | virtual axis |
| 210c, 510c | normal line |
| 211 | fixing member |
| 220 | angle adjusting mechanism |
| 221, 601 | holding member |
| 221a | vertical wall portion |
| 221a_1 | elliptical hole |
| 221b | curved wall portion |
| 221b_1 | curved surface |

| 221b_2 | inner gear |
| 222 | rotation roller |
| 223, 701b | spring |
| 224 | driving unit |
| 224a, 604 | circular gear |
| 224b | gear rotation shaft |
| 224c | motor |
| 224d | worm gear |
| 224e | transmission gear |
| 510b | rotation shaft |
| 602a | outer gear |
| 603 | rotation roller pair |
| 604 | outer gear |
| 701 | bias arm |
| 701a | roller |
| 702 | bias bearing |

**Claims**

1. A combiner unit comprising:

    a combiner (210) which is used for a head-up display and reflects a light beam emitted from a light source toward a user to project an image drawn by the light beam in a field of view of the user, the combiner unit being **characterized in** further comprising
    an angle adjusting mechanism (220) which holds the combiner (210) at a lower end or in a vicinity of the lower end of the combiner (210) erected with respect to a horizontal plane such that the combiner (210) is rotatable about a horizontal virtual axis (210b) traversing the combiner (210) at an almost center in a vertical direction, and which adjusts an inclined angle of the combiner (210) with respect to a vertical plane by rotating the combiner (210) about the virtual axis (210b);
    and further **characterized in that**
    the virtual axis (210b) is a tangential line of a reflecting surface of the combiner (210) which reflects the light beam emitted from the light source.

2. The combiner unit according to claim 1,
    wherein the angle adjusting mechanism (220) includes
    a holding member (221) which is provided at the lower end or in the vicinity of the combiner (210) erected with respect to the horizontal plane and has a curved surface (221b) forming a part of an outer peripheral surface in a cylindrical shape having the virtual axis (210b) as its center, and
    a plurality of rotation rollers (222) which each has a peripheral surface that is in contact with the curved surface (221b) of the holding member (221), and which supports the holding member (221) to be rotatable about the virtual axis (210b).

3. The combiner unit according to claim 2,
    wherein an inner gear (221b 2) having the virtual axis (210b) as a center of a pitch circle is formed on a back side of a surface (221b) in which the curved surface of the holding member (221) is formed, and
    the angle adjusting mechanism (220) includes
    a circular gear (224a) which engages with the inner gear (221b 2), and
    a driving unit (224) which rotatably drives the circular gear (224a) to rotate the holding member (221) about the virtual axis (210b).

4. The combiner unit according to claim 3,
    wherein the holding member (221) is disposed on each of left and right sides of the combiner (210),
    the plurality of rotation rollers (222) is disposed in the curved surface located on each of the left and right sides of the combiner (210), and
    the driving unit (224) includes
    two circular gears (224a) which each engage with the inner gear (221b 2) located in each of left and right end portions of the combiner (210),

a rotation shaft (224b) which connects shafts of the two circular gears (224a), and a driver which directly or indirectly rotates the rotation shaft and the two circular gears (224a).

**5.** The combiner unit according to claim 2,
wherein the angle adjusting mechanism (220) further includes
a biasing member (223) which applies a force to the holding member (221) in a direction to push the holding member (221) against the plurality of rotation rollers (222).

**Patentansprüche**

**1.** Kombinatoreinheit, umfassend
einen Kombinator (210), der für ein Head-Up Display verwendet wird und einen von einer Lichtquelle ausgesendeten Lichtstrahl in Richtung eines Nutzers reflektiert, um ein Bild, das von dem Lichtstrahl gezeichnet wird, in ein Sichtfeld des Nutzers zu projizieren, wobei die Kombinatoreinheit **dadurch gekennzeichnet ist, dass** sie ferner umfasst einen Winkelanpassungsmechanismus (220), der den Kombinator (210) an einem unteren Ende oder in einer Umgebung des unteren Endes des Kombinators (210) hält, aufgerichtet in Bezug auf eine horizontale Ebene, so dass der Kombinator (210) drehbar um eine horizontale virtuelle Ache (210b) ist, die den Kombinator (210) an einer beinahen Mitte in einer vertikalen Richtung durchläuft, und der einen Neigungswinkel des Kombinators (210) in Bezug auf eine vertikale Ebene einstellt, indem der Kombinator (210) um die virtuelle Achse (210b) gedreht wird; und ferner **dadurch gekennzeichnet ist, dass**
die virtuelle Achse (210b) eine Tangentiallinie einer reflektierenden Oberfläche des Kombinators (210) ist, die den Lichtstrahl reflektiert, der von der Lichtquelle ausgesendet wird.

**2.** Kombinatoreinheit nach Anspruch 1,
wobei der Winkelanpassungsmechanismus (220) enthält
ein Halteelement (221), das an dem unteren Ende oder in der Umgebung des Kombinators (210), der in Bezug auf die horizontale Ebene aufgerichtet ist, bereitgestellt ist, und das eine gekrümmte Oberfläche (221b) aufweist, die einen Teil einer äußeren peripheren Oberfläche in einer zylindrischen Form bildet, mit der virtuellen Achse (210) als ihre Mitte, und
eine Mehrzahl an Rotationsrollen (222), die jeweils eine periphere Oberfläche aufweisen, die in Kontakt mit der gekrümmten Oberfläche (221b) des Halteelements (221) ist, und die das Halteelement (221) unterstützt, um drehbar um die virtuelle Achse (210b) zu sein.

**3.** Kombinatoreinheit nach Anspruch 2,
wobei ein Innenzahnrad (221b 2), das die virtuelle Achse (210b) als eine Mitte eines Neigungskreises hat, auf einer Rückseite einer Oberfläche (221b) gebildet wird, in der die gekrümmte Oberfläche des Halteelements (221) gebildet ist, und
der Winkelanpassungsmechanismus (220) enthält
ein kreisförmiges Zahnrad (224a), das in das Innenzahnrad (221b2) eingreift, und eine Antriebseinheit (224), die das kreisförmige Zahnrad (224a) drehend antreibt, um das Halteelement (221) um die virtuelle Achse (210b) zu drehen.

**4.** Kombinatoreinheit nach Anspruch 3,
wobei das Halteelement (221) an jeder der linken und der rechten Seiten des Kombinators (210) angeordnet ist, die Mehrzahl an Rotationsrollen (222) in der gekrümmten Oberfläche angeordnet ist, die sich auf jeder der linken und rechten Seiten des Kombinators (210) befindet, und
die Antriebseinheit (224) enthält
zwei kreisförmige Zahnräder (224a), die in das Innenzahnrad (221b2) eingreifen, das sich in jedem der linken und rechten Endabschnitte des Kombinators (210) befindet,
eine Rotationswelle (224b), die Wellen der zwei kreisförmigen Zahnräder (224a) verbindet, und
einen Antreiber, der direkt oder indirekt die Rotationswelle und die zwei kreisförmigen Zahnräder (224a) rotiert.

**5.** Kombinatoreinheit nach Anspruch 2,
wobei der Winkelanpassungsmechanismus (220) ferner enthält
ein Vorspannelement (223), das eine Kraft auf das Halteelement (221) in eine Richtung ausübt, um das Halteelement (221) gegen die Mehrzahl an Rotationsrollen (222) zu drücken.

**Revendications**

1. Unité de combinaison comprenant :

   un combineur (210) qui est utilisé pour un affichage tête haute et réfléchit un faisceau lumineux émis par une source de lumière vers un utilisateur pour projeter une image dessinée par le faisceau lumineux dans un champ de vision de l'utilisateur, l'unité de combinaison étant **caractérisée en ce qu'**elle comprend en outre
   un mécanisme de réglage d'angle (220) qui maintient le combineur (210) au niveau d'une extrémité inférieure ou à proximité de l'extrémité inférieure du combineur (210) dressé par rapport à un plan horizontal de sorte que le combineur (210) puisse tourner autour d'un axe virtuel horizontal (210b) traversant le combineur (210) presque au centre dans une direction verticale, et qui règle un angle incliné du combineur (210) par rapport à un plan vertical en faisant tourner le combineur (210) autour de l'axe virtuel (210b) ;
   et **caractérisée en outre en ce que**
   l'axe virtuel (210b) est une ligne tangentielle d'une surface réfléchissante du combineur (210) qui réfléchit le faisceau lumineux émis par la source de lumière.

2. Unité de combinaison selon la revendication 1,
   dans laquelle le mécanisme de réglage d'angle (220) comporte
   un élément de maintien (221) qui est prévu au niveau de l'extrémité inférieure ou à proximité du combineur (210) dressé par rapport au plan horizontal et a une surface incurvée (221b) faisant partie d'une surface périphérique externe dans une forme cylindrique ayant comme centre l'axe virtuel (210b), et
   une pluralité de rouleaux tournants (222) qui ont chacun une surface périphérique qui est en contact avec la surface incurvée (221b) de l'élément de maintien (221), et qui supporte l'élément de maintien (221) pour pouvoir tourner autour de l'axe virtuel (210b).

3. Unité de combinaison selon la revendication 2,
   dans laquelle un engrenage interne (221b 2) ayant l'axe virtuel (210b) comme centre d'un cercle primitif est formé sur un côté arrière d'une surface (221b) dans laquelle la surface incurvée de l'élément de maintien (221) est formée, et le mécanisme de réglage d'angle (220) comporte
   un engrenage circulaire (224a) qui s'engage avec l'engrenage interne (221b 2), et
   une unité d'entraînement (224) qui entraîne en rotation l'engrenage circulaire (224a) pour faire tourner l'élément de maintien (221) autour de l'axe virtuel (210b).

4. Unité de combinaison selon la revendication 3,
   dans laquelle l'élément de maintien (221) est disposé sur chacun des côtés gauche et droit du combineur (210), la pluralité de rouleaux tournants (222) est disposée dans la surface incurvée située sur chacun des côtés gauche et droit du combineur (210), et
   l'unité d'entraînement (224) comporte
   deux engrenages circulaires (224a) qui s'engagent chacun avec l'engrenage interne (221b 2) situé dans chacune des parties d'extrémité gauche et droite du combineur (210),
   un arbre tournant (224b) qui relie les arbres des deux engrenages circulaires (224a), et
   un élément d'entraînement qui fait tourner directement ou indirectement l'arbre tournant et les deux engrenages circulaires (224a).

5. Unité de combinaison selon la revendication 2,
   dans laquelle le mécanisme de réglage d'angle (220) comporte en outre
   un élément de sollicitation (223) qui applique une force à l'élément de maintien (221) dans une direction pour pousser l'élément de maintien (221) contre la pluralité de rouleaux tournants (222).

【Fig.1】

【Fig.2】

【Fig.3】

【Fig.4】

（A）

（B）

（C）

【Fig.5】

【Fig.6】

【Fig.7】

【Fig.8】

【Fig.9】

G1

DISTANCE FROM EYE TO VIRTUAL IMAGE

**CENTERLESS TILT**
**--- BOTTOM TILT**

S1

S2

VIRTUAL IMAGE POSITION[mm]

HEIGHT OF Eyebox[mm]

【Fig.10】

P1

BOTTOM TILT

（A）

P2

CENTERLESS TILT

（B）

22

【Fig.11】

【Fig.12】

【Fig.13】

【Fig.14】

【Fig.15】

HEIGHT OF EYE BOX POSITION

[Fig.16]

EP 2 993 513 B1

（A）

（B）

【Fig.17】

【Fig.18】

【Fig.19】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10268227 A
- JP 2012133244 A
- JP 4928014 B
- WO 2013128159 A1